# EUROPEAN PATENT SPECIFICATION

(11) **EP 0 841 269 B1**
(45) Date of publication and mention of the grant of the patent: **03.04.2002**
(21) Application number: 97119568.0
(22) Date of filing: 07.11.1997
(51) Int. Cl.: B65G 59/02

(54) **Stacked-container separating apparatus and method**
Einrichtung und Verfahren zum Vereinzeln von gestapelten Behältern
Dispositif et procédé pour séparer des récipients empilés

(30) Priority: 12.11.1996 JP 31548496
(43) Date of publication of application: 13.05.1998
(73) Proprietor: Misuzu Koki Company Limited, Mie-gun, Mie-ken (JP)
(72) Inventor: Hashimoto, Masami, Chiba-shi, Chiba-ken (JP); Nishizawa, Kunio, Katsushika-ku, Tokyo (JP)
(74) Representative: Müller-Boré & Partner Patentanwälte

(56) References cited:
- WO-A-91/17102
- DE-A- 4 136 849
- US-A- 2 701 064
- US-A- 3 601 266

## Description

This invention relates to a stacked-containers separating apparatus and method for separating stacked containers to separately disposed containers.

### 2. Description of the Prior Art

An example of such a stacked-container separating apparatus or method of the prior art is disclosed in Japanese Patent Application Laid-Open Publication No. 55-119630, in which the stacked-container separating apparatus comprises a stack separating device for releasing engaged items to be transferred sequentially one by one from the bottom thereof while engaging said items in stacked condition, an ejecting conveyor for sequentially ejecting the separated item in separated condition from said stack separating device, a sliding device for advancing these items to be transferred in stacked condition from these items being made by drive of a motor via a crank mechanism.

In Japanese Patent Application Laid-Open Publication No. 58-100025, there is also disclosed a stacker and stack-separating apparatus which is operatively provided with two types of nails; nail A and B at both of left and right ends to allow to stack containers or to separate stacked containers respectively.

In such a prior art stacked-container separating apparatus, it is common to handle these stacked containers to drop downwards vertically one by one.

The stacked-container separating apparatus and method of the prior art needs to separate the stacked containers one by one, and then need to turn upside down before each of the separated containers to be transferred to a washing machine. It is thus required to provide an additional device for reversing each of the containers.

Specifically, it has a problem with such container-wash-line, which has a large amount of processing capability of more than 2,000 containers per hour, wherein an reversing operation for the containers has to be included, but in view of quantity of containers, it is difficult to realize such reversing operation.

Furthermore, it has another problem to degrade working environment and make its working efficiency worse since the operation to reverse the containers requires to use a plurality of air pressure cylinders etc., which cause noises to make higher, which are generated during the operation of air pressure cylinders and by dropping the containers during the reversing operation.

Still further, it has other problem that the prior art has easily produce deformations or damages to the containers during the reversing operation, and other container relating defects, such as wear of accessory of the containers.

DE 4136849A1 discloses an unstacking device used with pallets wherein a stack of pallets is moved horizontally in boxed arrangement into a vertical conveyor. The stack is raised in stages so that each topmost pallet moves to a specific transfer position. The topmost pallet is moved horizontally in the longitudinal direction of its skids to a turning device where it is determined whether the topmost pallet is in the normal or up-ended position. The turning device is turned with the pallet about a horizontal turning axis when the supplied pallet is found to be in the up-ended position and the turned pallet is moved on further to a discharge conveyor.

It is the object of the present invention to provide a stack separating equipment and a stack separating method which enable an improved and quicker processing of stacked containers.

The object is fulfilled by a stack separating equipment having the features disclosed in claim 1 and a stack separating method having the features disclosed in claim 2.

### BRIEF SUMMARY OF THE INVENTION

According to the invention there is provided a stacked-container separating apparatus which comprises: a supply conveyor for supplying stacked containers; a lifting device for lifting the whole stacked containers upward, which are carried to a downstream end of said supply conveyor by itself; a separating and reversing device having the shape of a letter U when viewed from a side of it, and having an upstream end positioned upward of said lifting device for reversing the containers while transporting by holding them between the left and right sides of the containers; and an ejection conveyor having an upstream end positioned downward of downstream end of said separating and reversing device for ejecting said containers.

Further there is provided a method for stack-separating stacked containers, which comprises: transporting a whole set of stacked containers formed by stacking a plurality of containers to a lifting device by a supply conveyor for supplying said stacked containers; lifting upward by said lifting device; nipping at both sides of the container which is located at the top position of said stacked containers by a separating and reversing device which has an upstream end located upward of said lifting device; separating each of said stacked containers respectively, reversing each of said containers upside down while transporting the block of containers; and mounting each of said reversed containers sequentially onto an ejecting conveyer,
wherein the separating and reversing steps are achieved through a device having the shape of a letter U when viewed from the side of it.

### BRIEF DESCRIPTION OF THE DRAWING

This invention will be explained in greater detail with reference to an example of an embodiment shown in the drawings, in which:
Fig.1 shows a front view of a stacked-container separating apparatus of the invention,
Fig.2 shows a perspective view of stacked containers "A" being transferred from a supply conveyer for the stacked containers via a lifting device to a separating and reversing device according to a first embodiment of the present invention,
Fig.3 shows a perspective view of stacked containers "A" being transferred from a supply conveyer for the stacked containers via a lifting device to a separating and reversing device according to a second embodiment of the present invention,
Fig.4 shows a partially enlarged side view of the stacked-container separating apparatus of the present invention,
Fig.5 shows a plan view of the stacked-container separating apparatus a front view of an stack-separating device of the present invention.
Fig.6 shows illustration for transfer, stack separating and reversing operations for the stacked and separated containers respectively.

### DETAILED DESCRIPTION OF THE PREFERRED EMBODIMENT

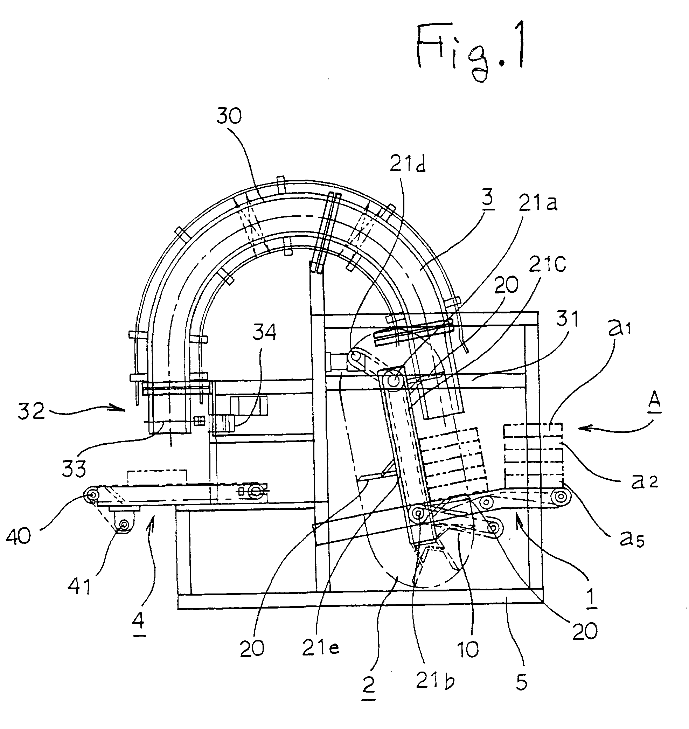

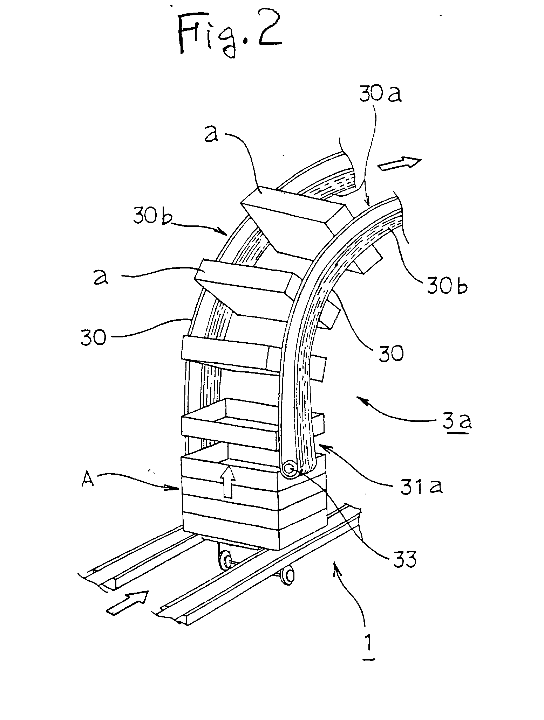

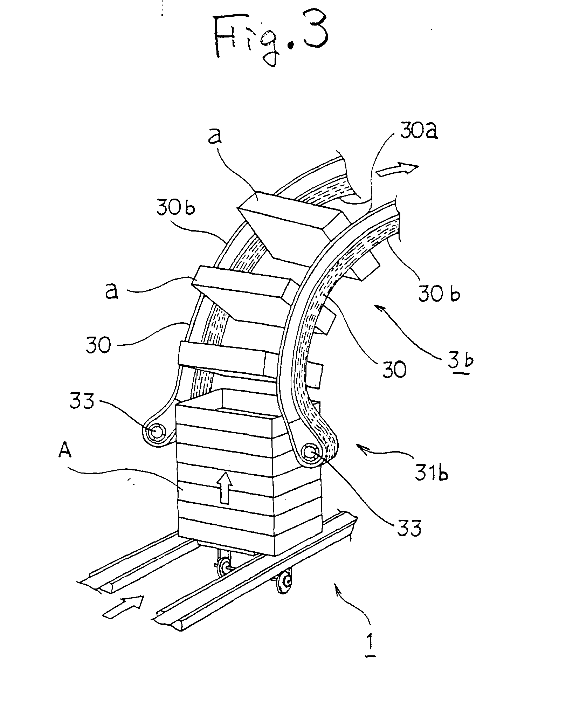

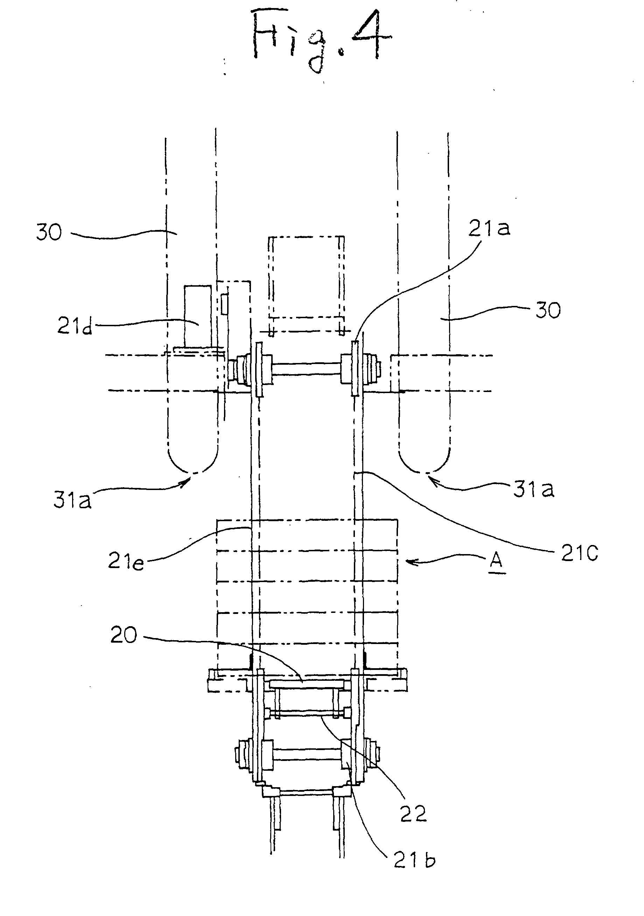

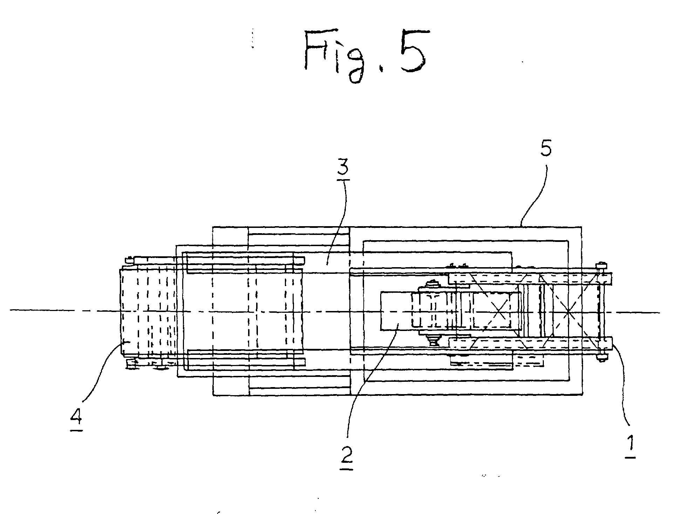

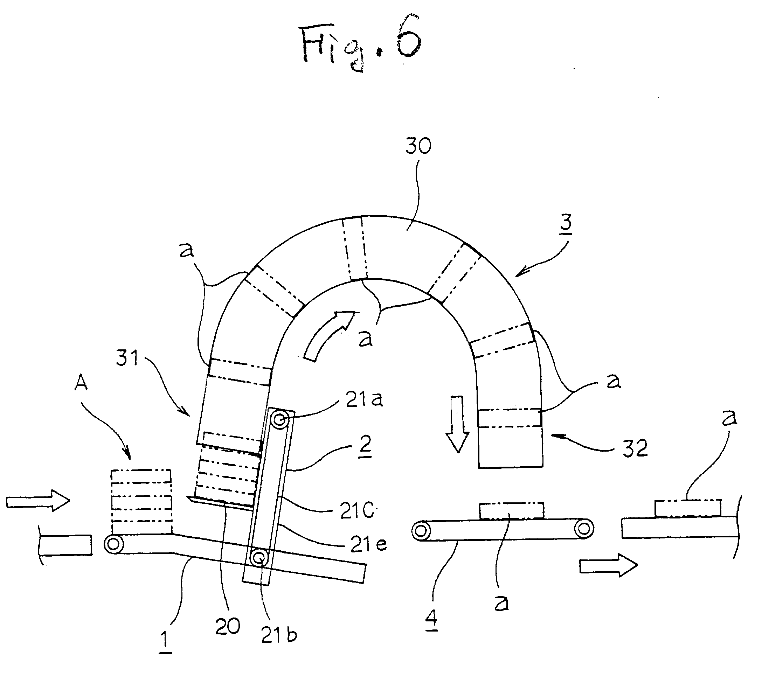

Now description of the preferred embodiments will be made referring to Fig.1 which shows a front view of a stacked-container separating apparatus of the invention, Fig.2 which shows a perspective view of a transfer of stacked containers from a supply conveyer and a lifting device to a separating and reversing device, Fig.3 which shows a perspective view of a transfer of containers from a supply conveyer for stacked containers and a lifting device to a separating and reversing device according to a second embodiment of the present invention, separating and reversing device, Fig.4 which shows a side view of the stacking apparatus,Fig.5 which shows a plan view of the stacked-container separating apparatus shown in Fig.1, and Fig.6 which shows illustration of transfer, stack separating and reversing operations for the stacked container respectively.

Each of the containers "a", which is to be stacked as item be transferred, may be made of hard plastic material, metallic material etc., and has a planer bottom portion in the rectangular shape and its surrounding side portions, and its top has a opened plane, so that it has a structure on which stacked-containers including a few containers or up to tens of containers can be mounted. Each of the containers is transferred, with some foods such as breads being placed on the bottom portion of the container "a".

A few containers or a few of tens of containers "a" are vertically stacked together to form layers of stacked containers "A" in preparation for washing them after use. According to the present invention, five containers "a" are stacked to form a block of stacked containers "A".

A supply conveyor 1 for the stacked containers, a lifting device 2, a container separating and reversing device 3, and an ejecting conveyer 4 for ejecting a separated container are attached to a frame 5 respectively. The supply conveyor 1 has a pair of endless conveyors such as belt conveyors, chain conveyors, or link conveyors positioned apart respectively at left and right ends of the supply conveyor, and transfers the stacked container "A" supplied from the upstream end to the downstream end of the conveyor 1. According to the present invention, the supply conveyor 1 has approximately a length of one thousand and two hundred millimeters, and is supplied with the stacked containers "A" from the upstream side of the supply conveyer ( not shown in the FIGURE). The conveyor 1 is horizontally positioned from its upstream portion to its middle portion, and is positioned with slightly inclined downward from the middle portion to a downstream end 10 of the conveyer 1.

The lifting device 2 is positioned at the downstream end of the supply conveyer 1, and has an endless chain link device 21 which stands between the left and right sides of the conveyer 1 facing approximately toward downstream side of the supply conveyer 1; lifting plates 20 which are attached to and between the left and right endless of the chain link device 21; and a horizontal shaft 22. The chain link device 21 has a driving sprocket 21a at its top, a follower sprocket 21b at its bottom, and provides endlessly a endless chain 21c between the driving sprocket and the follower sprocket 21b. The driving sprocket 21a is connected to the driving motor 21d using the sprocket and the endless chain. A chain guide has a planer body provided outside of the endless chain 21c, as shown in the Figures by 21e.

Lifting plates 20, which are provided between the endless chains 21c which are driven to rotate for feed-lifting endlessly, and are made of metal planer body supported by the horizontal shaft 22, and each of the plates are lifted with extending horizontally toward the supply conveyer 1. Sets of the plates 20 and the horizontal shafts 22 are attached to the endless chains making substantially same interval between the sets. The interval of these sets may be changed or adjusted in response with the height of the block of the stacked containers "A". According to the present invention, three sets of the lifting plates and the horizontal shafts are provided, which are able to handle of the heights when five to seven containers are stacked. In another embodiment, instead of stack-separating of the lifting plates 20 of the lifting device 2, a plurality of lifting shafts may be attached to the horizontal shaft 22 which is positioned inside of the endless chain 21c, and may be horizontally and orthogonal extended from and to the shaft 22, to effect similarly as described above.

The lifting device 2 lifts the stacked containers "A" from bottom thereof as arrived, which are supplied by the supply conveyer 1, and puts on the lifting plate 20 to lift the containers "A". The lifting plate 20 then operates to ascend and descend endlessly by the drive of the end less chain 21, in this case ascending of the plate takes place at the side of the supply conveyer 1.

The container separating and reversing device 3 has a pair of vertical type of curved conveyers 30 which have inverted U shapes when viewed from its front, and which are positioned in parallel each other at the left and right sides thereof, whereby the upstream end 31 of the conveyers 30 is positioned upward to the lifting device 2, and the downstream end 32 of the conveyers 30 is positioned upward to the upstream end of the ejection conveyer 4, and the left and right curved conveyers 30 is movably provided within the frame 5 so that the distance between them is set narrow or wide. According to another embodiment, the distance of the left and right conveyers 30 can be fixedly mounted on the frame 5. The driving sprocket, which is a rotating portion 33 of the downstream end of the conveyers, is connected to a driving motor 34.

Each of the curved conveyers 30 of the separating and reversing device 3, which comprises a plastic belt having a number of small protrusions thereon, and a endless belt conveyer of such as a friction-link type of a high frictional force, has belt conveyer-plane facing the side of the conveyors. The left and right curved conveyors 30 is movably provided so that the distance between them can be adjusted narrower or wider to meet with the width of the containers "A", thus both of the conveyers are put in parallel with a distance slightly narrower than the width of the container which is to be nipped between the conveyers 30. According to this embodiment, such adjustment is done by moving only one of the curved conveyers 30. Each of these conveyers has a sprocket or gear provided at the upstream and downstream ends for driving endlessly, and each of belt planes of both of the conveyers faces each other and provides an inner surface 30a which is moving from the upstream to the downstream of the conveyers, and the surface of the other side of each of the conveyers forms an outer back plane 30b.

In the first embodiment shown in Fig.2, the upstream end 31a of the container separating and reversing device 3a remains the mutual distance between the curved conveyers 30 in parallel .

In the second embodiment shown in Fig.3, the upstream end 31b of the container separating and reversing device 3b has a distance between the left and right curved conveyers 30, which has the shape of Japanese "katakana" character " 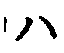 " when viewed from its upstream frontal position, such that the distance is gradually increased toward the end of the conveyers 30 from the other position of the conveyers 30.

The distance of the curved conveyers 30 can be adjusted to be narrower or wider to meet with the width of the container A, and in this case it is set slightly narrower than the width of the conveyer A to be transferred.

Each of the conveyers 30 has the rotating portion 33 comprising such as sprocket, or gear at the downstream end 32, and the rotational portion 33 operates endlessly by connecting to the driving motor 34 operating as a driving device. Both of the left and right curved conveyers 30 run respectively at same velocity by a common driving motor 34.

The container ejection conveyer 4 is an endless conveyer, such as a belt conveyer, chain conveyer, link conveyer and the others, and driven by a driving sprocket 40 positioned downstream to the conveyer. The driving sprocket 40 is connected to a motor 41 for driving the container ejection conveyer 4. The ejection conveyer 4 is positioned at the downstream end 32 of the separating and reversing device 3, and used for transferring the container "a", which is separated and dropped by and from the downstream end of the separating and reversing device 3.

Next operation of the embodiment of the stacked-container separating apparatus and method according to this invention is described. The distance between the curved conveyers 30 of the separating and reversing device 3 is pre-adjusted to meet with the width of the container "a" to such a degree that the distance is slightly smaller than the width of the container. A set of the containers "A", which is formed by stacking a plurality of the vacant containers, in this embodiment, by stacking five vacant containers, is transferred to the lifting device 2 via the supply conveyer 1.

In the supply conveyer 1, the portion including from its mid portion to the downstream end 10 is formed such that it is slightly bent downward, that is, bent downward at the frontal position of the endless chain link device 21 of the lifting device 2. Thus when the stacked containers "A" touch the chain guide 21d, it is lifted upward by the lifting plate 20 which is coming up from downward. A moving velocity of the chain link device 21 and lifting plate 20 of the lifting device 2 is set lower than the moving velocity of the curved conveyers 30 of the separating and reversing device.

When the stacked containers "A" are lifted upward, the top container "a1" of the containers reaches a position between the left and right curved conveyers 30 of the upstream end 31 of the separating and reversing device 3. According to the first embodiment of the invention, a upstream end 31a of the conveyers 30 has a gap which extends in parallel so that only the top of containers a1 is captured between the conveyers 30 running endlessly and transported to the downstream end 32.

According to the second embodiment of the invention, the upstream end 31b of the conveyer 30 of a container separating and reversing device 3b has a gap which is increasingly widen in the shape of Japanese katakana letter " 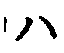 ", that is an unfolded fan so that only the top container a1 is easily captured between the conveyers 30 and transferred to the downstream end 32. The lifting plate 20 of the lifting device 2 raises itself so that the containers a2,a3,a4 and a5, are sequentially separated with similar pace from the top of the containers "A", which comes to the top secondly and so on, and captured between the left and right curved conveyers 30 to transfer toward the downstream end 32.

These separated containers al-a5 become respectively reversed state in regard to the upper and lower planes of the container while the containers are transported by the conveyers 30 of the separating and reversing device 3, and fall naturally from the downstream end 32 onto the upstream end of the container ejection conveyer 4. Each of the containers "a" is thus automatically reversed while transferred in captured state by the conveyers 30. The ejection conveyer 4 then transfers sequentially each of the containers one by one, which drops thereon.

The present invention is thus able to separate and reverse sequentially each of the stacked containers, so that it result in separating and reversing a large quantity of containers, e.g. approximately up to 2,000 containers per hour.

The present invention is thus able to increase working environment since it does not require any specific stack reversing device, which does not produce any significant noise during reversing the container, or due to air cylinders. Further, the present invention is able to avoid deformation due to the container reversing operation, damage such as defect, deterioration such as wear of accessory of container.

## Claims

1. A stack-separating equipment comprising:
a supply conveyor (1) for supplying stacked containers (A);
a lifting device (2) for lifting the whole stacked containers (A) upward, which are carried to a downstream end (10) of said supply conveyor (1) by itself;
a separating and reversing device (3) having an upstream end positioned upward of said lifting device for reversing the containers (a) while transporting them and
an ejection conveyor (4) having an upstream end positioned downward of the downstream end of said separating and reversing device (3) for ejecting said containers,
**characterized in that**
said separating and reversing device (3) has the shape of a letter U when viewed from a side of it and transports the containers by holding them between their left and right sides.

2. A stack-separating method comprising:
transporting a whole set of stacked containers (A) formed by stacking a plurality of containers (a) to a lifting device (2) by a supply conveyor (1) for supplying said stacked containers;
lifting upward by said lifting device (2);
nipping at both sides of the container which is located at the top position of said stacked containers by a container reversing device which has an upstream end located upward of said lifting device;
separating each of said stacked containers respectively;
reversing each of said containers upside down while transporting the containers; and mounting each of said reversed containers sequentially onto an ejecting conveyor,
wherein the separating and reversing steps are achieved through a device having the shape of a letter U when viewed from a side of it.

## Patentansprüche

1. Stapelvereinzelungsvorrichtung, umfassend:
einen Zufuhrförderer (1) zum Zuführen gestapelter Behälter (A);
eine Anhebevorrichtung (2) zum Heben der Gesamtheit der gestapelten Behälter (A) nach oben, welche zu einem stromabwärtigen Ende (10) des Zufuhrförderers (1) durch diesen selbst gefördert werden;
eine Trenn- und Umkehrvorrichtung (3), die ein stromaufwärtiges Ende, das oberhalb der Anhebevorrichtung positioniert ist, zum Umkehren der Behälter (A), während diese transportiert werden, aufweist; und
einen Abwurfförderer (4), der ein stromaufwärtiges Ende abwärts von dem stromabwärtigen Ende der Trenn- und Umkehrvorrichtung (3) aufweist, um die Behälter abzuwerfen,
**dadurch gekennzeichnet, daß**
die Trenn- und Umkehrvorrichtung (3) die Form eines Buchstabens U aufweist, wenn sie von der Seite gesehen wird, und die Behälter durch Halten derselben zwischen ihren rechten und linken Seiten transportiert.

2. Verfahren zum Vereinzeln von Stapeln, umfassend:
Transportieren eines gesamten Satzes von gestapelten Behältern (A), der durch Stapeln einer Mehrzahl von Behältern (A) ausgebildet wird, zu einer Hebevorrichtung (2) durch einen Zufuhrförderer (1), um die gestapelten Behälter zuzuführen;
Heben nach oben durch die Hebevorrichtung (2);
Quetschen an beiden Seiten des Behälters, welcher an der obersten Position der gestapelten Behälter angeordnet ist, durch eine Behälterumkehrvorrichtung, welche ein stromaufwärtiges Ende oberhalb der Hebevorrichtung angeordnet aufweist;
Trennen von jedem der gestapelten Behälter;
Umkehren von jedem Behälter mit der Oberseite nach unten, während die Behälter transportiert werden; und Anordnen von jedem der umgekehrten Behälter nacheinander auf einem Abwurfförderer;
worin die Trenn- und Umkehrschritte durch eine Vorrichtung erreicht werden, die die Form eines Buchstabens U aufweist, wenn diese von einer Seite gesehen wird.

## Revendications

1. Matériel de séparation d'empilements comprenant :
un convoyeur d'alimentation (1) destiné à alimenter des conteneurs empilés (A) ;
un dispositif (2) de levage destiné à lever, vers le haut, tous les conteneurs empilés (A), lesquels sont transportés, par le convoyeur d'alimentation (1) lui-même, vers une extrémité d'aval (10) de celui-ci ;
un dispositif (3) de séparation et de renversement comportant une extrémité d'amont placée vers le haut dudit dispositif de levage, destiné à renverser les conteneurs (a) tout en les transportant ; et
un convoyeur (4) d'éjection comportant une extrémité d'amont placée vers le bas de l'extrémité d'aval dudit dispositif (3) de séparation et de renversement destiné à éjecter lesdits conteneurs, **caractérisé en ce que** ledit dispositif (3) de séparation et de renversement a la forme de la lettre U lorsqu'on le regarde depuis son côté et transporte les conteneurs en les maintenant entre ses côtés gauche et droit.

2. Procédé de séparation d'empilements comprenant :
le transport de tout un ensemble de conteneurs empilés (A) formé par empilement d'une pluralité de conteneurs (a) vers un dispositif (2) de levage par un convoyeur (1) d'alimentation pour alimenter lesdits conteneurs empilés ;
le levage, vers le haut, par ledit dispositif (2) de levage ;
le serrage, aux deux côtés du conteneur qui est situé au niveau de la position supérieure desdits conteneurs empilés par un dispositif de renversement de conteneur qui comporte une extrémité d'amont située vers le haut dudit dispositif de levage ;
la séparation respective de chacun desdits conteneurs empilés ;
le renversement de haut en bas de chacun desdits conteneurs tout en transportant les conteneurs ; et le montage séquentiel de chacun desdits conteneurs renversés sur un convoyeur d'éjection,
dans lequel les étapes de séparation et de renversement se font par un dispositif ayant la forme de la lettre U lorsqu'on le regarde depuis son côté.
